# EUROPEAN PATENT APPLICATION

(11) **EP 3 643 608 A1**
(43) Date of publication of application: **29.04.2020**
(21) Application number: 18248258.8
(22) Date of filing: 28.12.2018
(51) Int. Cl.: B64C 27/08, B64C 27/20, B64C 39/00, B64C 39/02, A47L 11/40

(54) **DRONE-BASED CLEANING METHOD AND SYSTEM**

(30) Priority: 27.10.2018 WO PCT/CN2018/112267
(71) Applicant: HiZero Technologies Co., Ltd, 518101 Guangdong (CN)
(72) Inventor: LI, Yang, Shenzhen, Guangdong 518101 (CN)
(74) Representative: Atkinson & Company Intellectual Property Limited

(57) **Abstract**

The embodiments of the present disclosure disclose a drone-based cleaning method and system, wherein the method includes: flying to a designated position of an object to be cleaned when the drone receives a cleaning instruction for cleaning the object to be cleaned, determining a cleaning area corresponding to the designated position on the outer surface of the object to be cleaned, obtaining environmental information of the cleaning area, controlling the cleaning device of the drone being flipped from below to a position parallel to the outer surface according to the environmental information, and controlling the cleaning device to clean the cleaning area.

## Description

### FIELD OF THE DISCLOSURE

The present disclosure relates to the field of drones, and in particular to a cleaning method and system based on a drone.

### BACKGROUND OF THE DISCLOSURE

At present, cleaning of many building exterior walls is done manually. The cleaning of exterior walls of a building is inefficient, and the manual cleaning is both inefficient and poses significant safety hazards when the building is a high-rise. In the prior art, a wall cleaning robot has been used to clean the exterior walls of a building. The wall cleaning robot usually cleans by crawling on the surface of the exterior wall of the building, but the cleaning efficiency is relatively low. Thus, an efficient method of cleaning the exterior walls of buildings is needed.

### SUMMARY OF THE DISCLOSURE

The embodiments of the present disclosure provide a cleaning method and system based on a drone, which can safely and intelligently clean using a cleaning device carried by the drone.

In a first aspect, an embodiment of the present disclosure provides a drone-based cleaning method, which is applied to a drone-based cleaning system, wherein the cleaning system includes the drone, a water supply pipe, and a detergent supply pipe. The drone comprises a cleaning device and a connection end piece. The cleaning device is disposed on a belly of the drone, and the drone is connected to the water supply pipe through the connection end piece. The drone is connected to the detergent supply pipe through the connection end piece.

The method includes: when the drone receives a cleaning instruction for cleaning an object to be cleaned, flying to a designated position of the object to be cleaned; determining a cleaning area corresponding to the designated position of an outer surface of the object to be cleaned; obtaining environmental information of the cleaning area; controlling a cleaning device of the drone to be flipped from below the drone to a position parallel to the outer surface according to the environmental information; and controlling the cleaning device to clean the cleaning area.

In a second aspect, an embodiment of the present disclosure provides a drone-based cleaning system, the system comprising: a control unit for flying to a designated position of an object to be cleaned when the drone receives a cleaning instruction for cleaning the object to be cleaned; a determination unit configured to determine a cleaning area corresponding to the designated position of the outer surface of the object to be cleaned; and an obtaining unit configured to obtain environmental information of the cleaning area; the control unit is further configured to control a cleaning device of the drone to be flipped from below the drone to a position parallel to the outer surface according to the environmental information; and means for controlling the cleaning device to clean the cleaning area.

In a third aspect, an embodiment of the present disclosure provides a computer readable storage medium, wherein the computer readable storage medium is used to store a computer program, and the computer program causes the computer to perform the first aspect of the embodiments of the present disclosure. An instruction that describes some or all of the acts.

In a fourth aspect, an embodiment of the present disclosure provides a computer program product, wherein the computer program product includes a non-transitory computer readable storage medium storing a computer program, the computer program being operative to cause a computer to execute some or all of the acts described in the first aspect of the embodiments. The computer program product can be a software installation package.

The implementation of the embodiments of the present disclosure have the following beneficial effects:
It can be seen that, in the embodiments of the present disclosure, when the drone receives the cleaning instruction for cleaning the object to be cleaned, the drone flies to the designated position of the object to be cleaned, determines the cleaning area corresponding to the designated position of an outer surface of the object to be cleaned, obtains environmental information of the cleaning area, controls the cleaning device of the drone to be flipped from below the drone to a position parallel to the outer surface according to the environmental information, and controls the cleaning device to clean the cleaning area. In this way, the drone can be more intelligently controlled for cleaning, making it safer for the drone to clean the object.

### BRIEF DESCRIPTION OF THE DRAWINGS

In order to more clearly illustrate the embodiments of the present disclosure or the technical solutions in the prior art, the drawings to be used in the embodiments or the description of the prior art will be briefly described below. Obviously, the drawings in the following description are only certain embodiments of the present disclosure, and other drawings can be obtained according to these drawings without any creative work for those skilled in the art.
Fig. 1A is a schematic diagram of the structure of a drone-based cleaning system according to an embodiment of the present disclosure;
Fig. 1B is a schematic diagram of a cleaning device in a drone according to an embodiment of the present disclosure;
Fig. 1C is a schematic view of the structure of another perspective of the cleaning device shown in Fig. 1B according to an embodiment of the present disclosure;
Fig. 1D is a schematic flowchart of an embodiment of a drone-based cleaning method according to an embodiment of the present disclosure;
Fig. 2 is a schematic flowchart of another embodiment of a drone-based cleaning method according to an embodiment of the present disclosure;
Fig. 3 is a schematic flowchart of another embodiment of a drone-based cleaning method according to an embodiment of the present disclosure;
Fig. 4 is a schematic diagram of the structure of a drone provided by an embodiment of the present disclosure; and
Fig. 5 is a schematic diagram of the structure of a drone-based cleaning system according to an embodiment of the present disclosure.

### DETAILED DESCRIPTION OF THE EMBODIMENTS

The technical solutions in the embodiments of the present disclosure are clearly and completely described in the following with reference to the drawings in the embodiments of the present disclosure. It is obvious that the described embodiments are only some of the embodiments of the present disclosure, and not all of the embodiments are described. All other embodiments obtained by a person of ordinary skill in the art based on the embodiments of the present disclosure without departing from the inventive scope are within the scope of the present disclosure.

The terms "first", "second" and the like in the specification and claims of the present disclosure and the above drawings are used to distinguish different objects, and are not intended to describe a specific order. Furthermore, the terms "comprising" and "including" are intended to cover a non-exclusive inclusion. For example, a process, method, system, product, or device that comprises a series of acts or units is not limited to the listed acts or units, but optionally also includes acts or units not listed, or, optionally, other acts or units inherent to these processes, methods, products, or equipment.

References to "an embodiment" herein mean that a particular feature, structure, or characteristic described in connection with the embodiments can be included in at least one embodiment of the present disclosure. The appearances of the phrases in various places in the specification are not necessarily referring to the same embodiments, and are not exclusive or alternative embodiments that are mutually exclusive. Those skilled in the art understand explicitly and implicitly that the embodiments described herein can be combined with other embodiments.

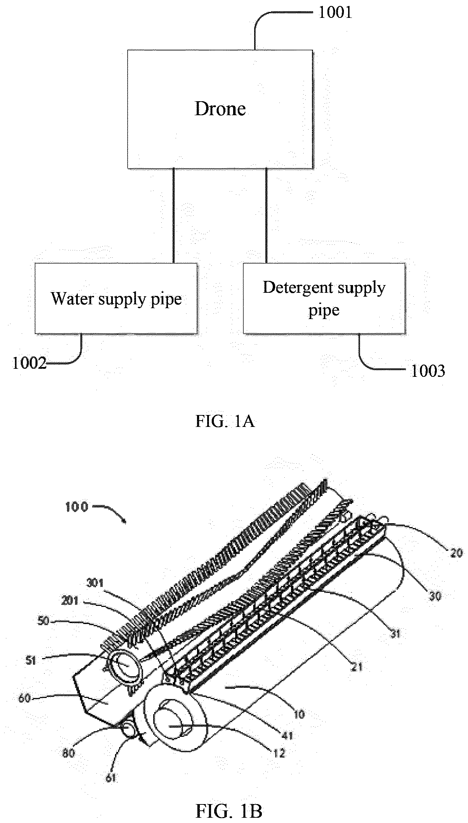

Referring to Fig. 1A, Fig. 1A is a schematic diagram of the structure of a drone-based cleaning system according to an embodiment of the present disclosure. The cleaning system includes a drone 1001, a water supply pipe 1002, and a detergent supply pipe 1003. The drone includes a cleaning device and a connection end piece. The cleaning device is disposed on the belly of the drone, and the drone is connected with the water supply pipe through the connection end piece. The drone is also connected with the detergent supply pipe through the connection end piece. Specifically, the drone can be connected to the water supply pipe and the detergent supply pipe from the top of the building through the connection end piece, or the drone can be connected to the water supply pipe and the detergent supply pipe disposed on the ground or disposed in a vehicle through the connection end piece. Thus, the water supply pipe and the detergent supply pipe can act as a safety cable to prevent the drone from falling during flight.

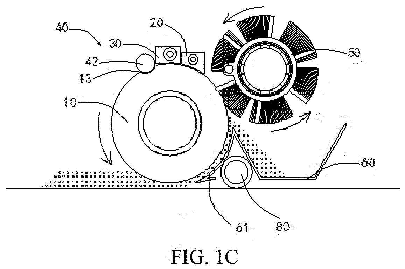

Referring to Figs. 1B-1C, Fig. 1B is a schematic diagram of a cleaning device in a drone according to an embodiment of the present disclosure, and Fig. 1C is another perspective of the cleaning device shown in Fig. 1B according to an embodiment of the present disclosure. As shown in Figs. 1B and 1C, the cleaning device 100 includes a cleaning roller 10, a drive motor 12 that drives the cleaning roller 10 to rotate, a clean water sink 20 separated from the cleaning roller 10 by a gap, a sewage sink 30 separated from the cleaning roller 10 by a gap, a pressing member 40 for deforming the cleaning roller 10 to squeeze out sewage, a roller brush 50 disposed on a lengthwise side of the cleaning roller 10, and a garbage collection box 60. The bristles on the roller brush 50 contact the cleaning roller 10, and the garbage collection box 60 is at least partially located below the roller brush 50. The cleaning roller 10 is rotated by the drive motor 12 to collect solid waste, which is then swept into the garbage collection box 60, and to adsorb liquid sewage.

In the process of rotating the cleaning roller 10, clean water in the clean water sink 20 flows into the cleaning roller 10 to provide clean water to the cleaning roller 10. When the cleaning roller 10 cleans the ground, the cleaning roller 10 will absorb sewage on the ground and the solid waste mixed therewith. When the cleaning roller 10, which is full of sewage, is rotated against the pressing member 40, a portion of the cleaning roller 10 is compressed by the pressing member 40. The amount of compression generated causes the sewage absorbed by a cleaning portion of the cleaning roller 10 to be squeezed upward. The pressing member 40 presses the sewage upward, causing the sewage to flow upward. The two sides of the cleaning roller 10 adjacent the compressed portion of the cleaning roller 10 are deformed upward, so that the side of the compressed portion of the cleaning roller 10, which is originally round or nearly round, is filled within the gap between the sewage sink 30 and the cleaning roller 10. The squeezed sewage is pushed up into the sewage sink 30 by the upward pressure. When the upward pressure generated by the deformation is greater than the gravity of the sewage stored in the sewage sink 30 plus the sewage stored in the sewage pipe, the sewage flows into the sewage sink 30 for recycling of the sewage.

A rotating shaft of the cleaning roller 10 is made of a hard material, and the outer peripheral portion thereof is made of a flexible material, for example, made of a sponge, a cotton cloth, or the like. The clean water is easily absorbed due to the porosity of the material and the surface cleaning force, thereby easily achieving the cleaning function. The cleaning roller 10 is driven to rotate by the drive motor 12, and the drive motor 12 is also mounted inside the shell.

The sewage sink 30 is disposed separately from the clean water sink 20. The clean water sink 20 supplies clean water to the cleaning roller 10, and the sewage sink 30 is used for collecting the sewage that is squeezed out by the cleaning roller 10. A bottom or side of the clean water sink 20 is provided with a clean water hole 21. Clean water in the clean water sink 20 flows through the clean water hole 21 onto the cleaning roller 10. The clean water sink 20 is disposed above the cleaning roller 10, and a gap is between the clean water sink 20 and the cleaning roller 10. Water inlets 201 are disposed on both sides of the clean water sink 20. The water inlets 201 communicate with the clean water sink 20, and the clean water in the clean water sink 20 enters through the water inlets 201 into the clean water sink 20. The water in the clean water sink 20 flows onto the cleaning roller 10 through the clean water hole 21.

Referring to Fig. 1C, the pressing member 40 is a pressing column 42 having a cylindrical shape. The pressing column 42 is disposed adjacent to the sewage sink 30 so as to squeeze the sewage into the sewage sink 30, and a surface of the pressing column 42 is pressed against a surface of the cleaning roller 10. The pressing column 42 may also have other shapes, such as a spherical shape. The pressing column 42 presses the cleaning roller 10 such that the surface of the cleaning roller 10 forms a recessed portion 13. One-quarter to one-half of a radius or diameter of the pressing column 42 is located at the recessed portion 13 to squeeze out sewage, while normal rotation of the cleaning roller 10 is not affected. Optionally, water outlets 301 are provided on one side or both sides of the sewage sink 30, and the amount of sewage can be controlled by providing electromagnetic valves at the water outlets 301.

Optionally, the pressing member 40 is a protrusion 41 disposed at the bottom of the sewage sink 30. The protrusion 41 may be disposed at a bottom edge of the sewage sink 30 or may be disposed at a bottom intermediate position of the sewage sink 30.

The roller brush 50 is located above the side surface of the cleaning roller 10, and the roller brush 50 is driven by a roller motor 51. When the cleaning roller 10 rotates, the roller brush 50 rotates in the opposite direction of the cleaning roller 10, thereby removing the solid waste on the cleaning roller 10. The solid waste is obtained by cleaning the object to be cleaned using the cleaning roller 10. The solid waste falls into garbage collection box 60 disposed below the cleaning roller 10, thereby removing the solid waste from the cleaning roller 10.

The garbage collection box 60 is disposed in the direction in which the cleaning roller 10 rotates and is spaced apart from the cleaning roller 10 by a gap. The garbage collection box 60 is located on one side of the cleaning roller 10 and directly under the roller brush 50. The solid waste is brushed into the garbage collection box 60, and any remaining solid waste is removed by the roller brush 50. The garbage collection box 60 is U-shaped, but the corners are arranged in a square shape.

Further, a scraper 61 is provided on one side of the garbage collection box 60 closest to the cleaning roller 10 for receiving solid waste dropped by the cleaning roller 10. A load bearing wheel 80 is disposed between the garbage collection box 60 and the scraper 61 for increasing the load bearing capacity of the garbage collection box 60. The scraper 61 is disposed in an arc shape and has one end connected to one side of the garbage collection box 60 abutting the cleaning roller 10.

Optionally, the cleaning system further includes a safety cable, and the drone can be connected to the safety cable through the connection end piece, thereby preventing the drone from falling from the sky. One end of the safety cable can be connected to the connection end piece of the drone, and the other end of the safety cable can be connected to the pipe hanging from the top floor of the building or connected to the pipe disposed on the ground or in the vehicle. Optionally, the water supply pipe and the detergent supply pipe can be used as the safety cable.

Optionally, the cleaning system may further include an airbag, which can be used as a safety device for the drone to protect the safety of the drone.

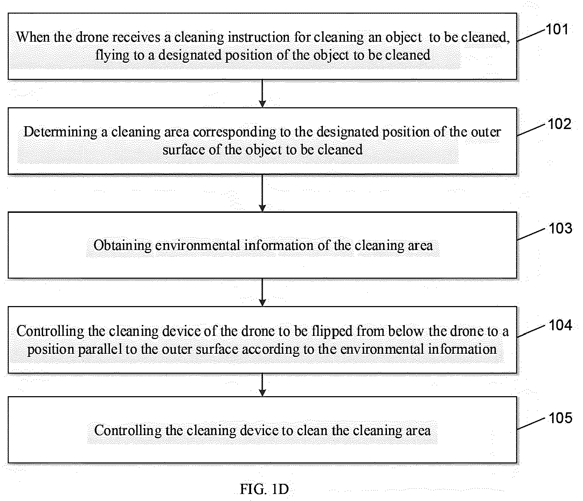

Consistent with Fig. 1A, referring to Fig. 1D a schematic flowchart of an embodiment of a method for cleaning a drone according to an embodiment of the present disclosure is provided. The drone-based cleaning method described in this embodiment includes the following:
101. When the drone receives a cleaning instruction for cleaning an object to be cleaned, flying to a designated position of the object to be cleaned.

The object to be cleaned may be, for example, an exterior wall of a building. When the building is tall, the exterior wall of the building may be cleaned by the drone according to an embodiment of the present disclosure. The object to be cleaned can also be any other object located at an elevated position. Considering that it is dangerous to use manual labor to complete cleaning work at elevated positions, the work can therefore be performed by the drone instead of through manual labor. In an embodiment of the present disclosure, when the drone receives the cleaning instruction, the drone can fly to a designated position according to the cleaning instruction. For example, the drone can be controlled to fly from the ground to a designated position that needs to be cleaned. As another example, the drone can be controlled to fly from the top of the building to the designated position where cleaning is required.

102. Determining a cleaning area corresponding to the designated position of the outer surface of the object to be cleaned.

In an embodiment of the present disclosure, the cleaning area corresponding to the designated position may be an area where the designated position of the drone is projected on the outer surface of the object to be cleaned, or it may be an area where the designated position of the drone is projected on the outer surface of the object to be cleaned and an area of a predefined size around the area where the designated position of the drone is projected.

103. Obtaining environmental information of the cleaning area.

In an embodiment of the present disclosure, the foregoing environmental information may include at least one of the following: the degree of contamination of the cleaning area, the material of the outer surface of the object to be cleaned, the smoothness of the outer surface of the object to be cleaned, and the like, which are not limited herein. Specifically if the cleaning area is the area where the designated position of the drone is projected on the outer surface of the object to be cleaned, the environmental information of the cleaning area may be directly obtained. If the designated position of the drone is projected on the outer surface of the object to be cleaned and the area of the predefined size around the area where the designated position of the drone is projected, then it is necessary to control the drone to perform flight movement near the cleaning area to obtain environmental information of the cleaning area.

Optionally, the drone includes an environment monitoring device. In the foregoing, at 103, acquiring environmental information of the cleaning area may include the following:
31. Detecting the cleaning area based on the environmental monitoring device of the drone to obtain dust information; and
32. Performing analysis according to the dust information to obtain environmental information.

The environmental monitoring device may include a dust collector to collect dust in an area of a predefined size of the outer surface of the object to be cleaned by the dust collector. Then, the weight or thickness of the collected dust is detected and the degree of contamination of the cleaning area is determined based upon the correspondence between the weight or thickness of the collected dust and preset weights or thickness of dust.

The above-mentioned environment detecting device may further include a surface smoothness detecting device, and the smoothness of the outer surface of the object to be cleaned can be detected by the surface smoothness detecting device.

Optionally, the drone includes a camera. In the foregoing, at 103, acquiring environmental information of the cleaning area may include the following:
33. Obtaining an object image of the cleaning area based on a camera of the drone; and
34. Performing image analysis on the object image to obtain environmental information.

In the embodiment of the present disclosure, the camera of the drone can be controlled to capture an object image of the cleaning area, and then the object image is compared to multiple image templates in a preset image template library. Each image template in the multiple image templates corresponds to one material, wherein a plurality of image templates can be photographed in advance for outer surfaces of objects made of a plurality of different materials to be cleaned, and then an image template library is created. When the object image matches an object image template in the plurality of images, the image template can be determined. The object material corresponding to the image template is the material of the outer surface of the object to be cleaned.

104. Controlling the cleaning device of the drone to be flipped from below the drone to a position parallel to the outer surface according to the environmental information.

In the embodiment of the present disclosure, the cleaning device disposed on the belly of the drone is flipped from below the drone to a position parallel to the outer surface of the object to be cleaned, so that the cleaning device can clean the outer surface of the cleaning object. For example, when the cleaning object is a building exterior wall, the cleaning device can be flipped over to be parallel to an exterior wall of the cleaning object.

105. Controlling the cleaning device to clean the cleaning area.

The above cleaning device may include at least one cleaning roller. The cleaning speed can be accelerated by providing a plurality of cleaning rollers on the cleaning device. Optionally, in the above at 105, controlling the cleaning device to clean the cleaning area may include the following:
51. Determining a cleaning strategy according to the environmental information; and
52. Controlling the cleaning device to clean the cleaning area according to the cleaning strategy.

In the embodiment of the present disclosure, different cleaning strategies may be determined according to different environmental information. When the obtained environmental information is the degree of contamination of the cleaning area, it may be determined that different degrees of contamination correspond to different cleaning strategies. For example, for different degrees of contamination, the amount of detergent can be determined, thereby preventing a lack of detergent which causes insufficient cleaning, or wasting too much detergent which results in a longer cleaning time.

When the environmental information obtained is the material of the outer surface of the object to be cleaned, a cleaning strategy can determine according to the material. For example, the cleaning materials selected for the exterior wall of the building when the exterior wall of the building is made of ceramic tile, tile or glass brick, may be different than the cleaning materials selected when the exterior wall of the building is made of stone slag, dry stick stone, etc., and may be different than the cleaning materials selected when the exterior wall of the building is made of paint and other materials.

The force of the cleaning roller contacting the cleaning area can also be set within different pressure ranges to prevent damage to the exterior wall material of the building. A cleaning strategy can be determined based on the obtained smoothness. For example, when the smoothness of the outer surface of the object to be cleaned is low, the force of the cleaning roller contacting the cleaning area can be greater, and when the smoothness of the outer surface of the object to be cleaned is high, the force of the cleaning roller contacting the cleaning area can be reduced. Thus, different cleaning strategies can be used to clean up the cleaning objects for different degrees of smoothness.

Optionally, in an embodiment of the present disclosure, the following may be further included:
A1. Obtaining flight parameters of the drone; and
A2. Opening the airbag when the flight parameter meets a preset condition.

The flight parameters may include at least one of the following: a flight speed, a flying height, an angle between the drone and a horizontal plane, an angular velocity of the drone, or the like, which are not limited herein.

It can be seen that, in the embodiment of the present disclosure, when the drone receives the cleaning instruction for cleaning the object to be cleaned, the drone flies to the designated position of the object to be cleaned, determines the cleaning area corresponding to the designated position of the outer surface of the object to be cleaned, obtains environmental information of the cleaning area, controls the cleaning device of the drone to be flipped from below the drone to a position parallel to the outer surface according to the environmental information, and controls the cleaning device to clean the cleaning area. In this way, drones can be controlled more intelligently to clean, making it safer for drones to clean exterior walls.

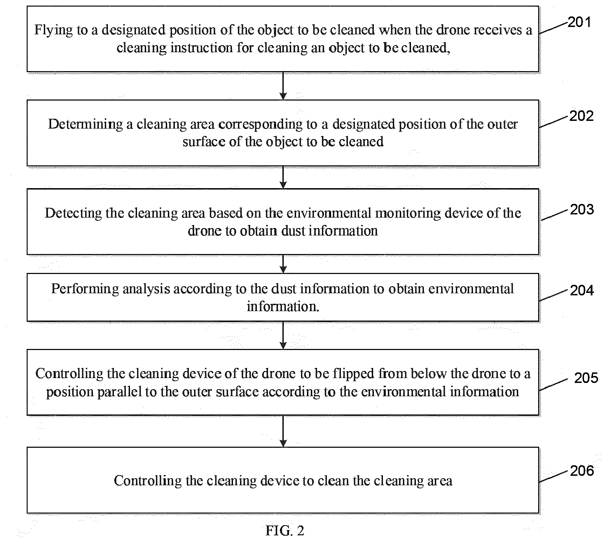

Please reference Fig. 2, Fig. 2 is a schematic flowchart of an embodiment of a method for cleaning a drone according to an embodiment of the present disclosure. The drone-based cleaning method described in this embodiment includes the following:
201. Flying to a designated position of the object to be cleaned when the drone receives a cleaning instruction for cleaning an object to be cleaned.
202. Determining a cleaning area corresponding to the designated position of the outer surface of the object to be cleaned.
203. Detecting the cleaning area based on the environmental monitoring device of the drone to obtain dust information.
204. Performing analysis according to the dust information to obtain environmental information.
205. Controlling the cleaning device of the drone to be flipped from below the drone to a position parallel to the outer surface according to the environmental information.
206. Controlling the cleaning device to clean the cleaning area.

It can be seen that, in the embodiment of the present disclosure, when the drone receives the cleaning instruction for cleaning the object to be cleaned, the drone flies to the designated position of the object to be cleaned and determines the cleaning area corresponding to the designated position of the outer surface of the object to be cleaned. The drone-based environmental monitoring device detects the cleaning area, obtains dust information, analyzes the dust information, obtains environmental information, and controls the cleaning device of the drone to be flipped from below the drone to be parallel to the outer surface according to the environmental information. The position of the cleaning device is controlled to clean the cleaning area, so that the drone can be more intelligently controlled for cleaning and cleaning the exterior wall by the drone is done more securely.

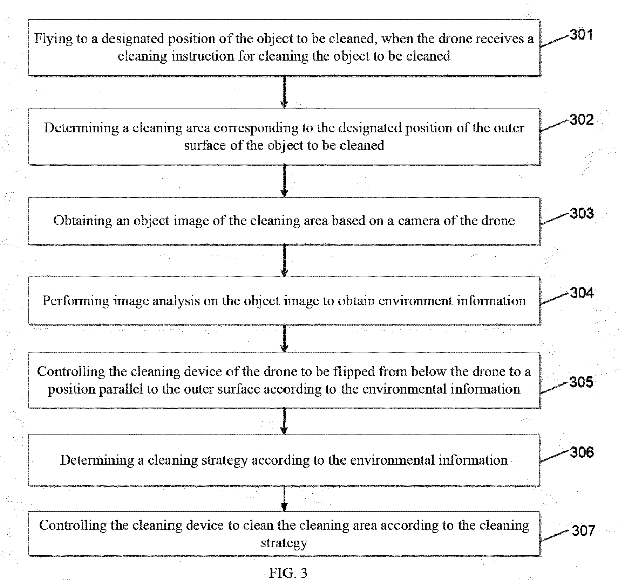

Please reference Fig.3, Fig. 3 is a schematic flowchart of an embodiment of a drone-based cleaning method according to an embodiment of the present disclosure. The drone-based cleaning method described in this embodiment includes the following:
301. Flying to a designated position of the object to be cleaned when the drone receives a cleaning instruction for cleaning the object to be cleaned.
302. Determining a cleaning area corresponding to the designated position of the outer surface of the object to be cleaned.
303. Obtaining an object image of the cleaning area based on a camera of the drone.
304. Performing image analysis on the object image to obtain environment information.
305. Controlling the cleaning device of the drone to be flipped from below the drone to a position parallel to the outer surface according to the environmental information.
306. Determining a cleaning strategy according to the environmental information.
307. Controlling the cleaning device to clean the cleaning area according to the cleaning strategy.

It can be seen that, in the embodiments of the present disclosure, when the drone receives the cleaning instruction for cleaning the object to be cleaned, the drone flies to the designated position of the object to be cleaned and determines the cleaning area corresponding to the designated position of the outer surface of the object to be cleaned. The camera of the drone obtains the object image of the cleaning area, performs image analysis on the object image, obtains environmental information, controls the cleaning device of the drone to be flipped from below the drone to a position parallel to the outer surface according to the environmental information, and controls the cleaning device to clean the cleaning area, so that the drone can be more intelligently controlled for cleaning, making it safer for the drone to clean the exterior walls of the object.

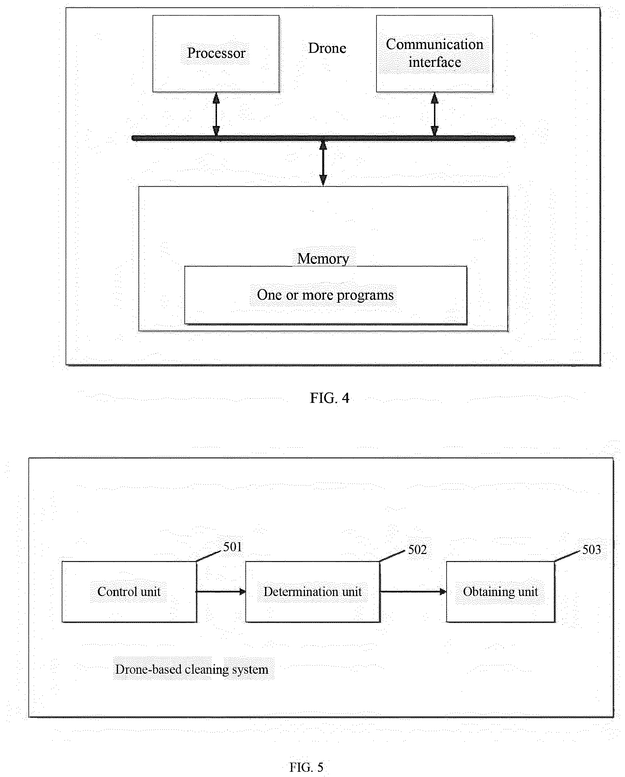

Referring to Fig. 4, Fig. 4 is a schematic diagram of the structure of a drone according to an embodiment of the present disclosure. The drone includes a processor, a memory, a communication interface, and one or more programs, where the one or more programs are stored in the above-described memory and are executed by the above-described processor. The program includes instructions for performing the following:

When the drone receives a cleaning instruction for cleaning the object to be cleaned, flying to a designated position of the object to be cleaned; determining a cleaning area corresponding to the designated position of the outer surface of the object to be cleaned; obtaining environmental information of the cleaning area; controlling a cleaning device of the drone to be flipped from below the drone to a position parallel to the outer surface according to the environmental information; and controlling the cleaning device to clean the cleaning area.

In another embodiment, the drone may include an environmental monitoring device, and the program includes instructions for performing the following to obtain environmental information of the cleaning area:

Detecting the cleaning area based on the environmental monitoring device of the drone to obtain dust information; and performing analysis based on the dust information to obtain environmental information.

In another embodiment, the drone may include an environmental monitoring device, and the program includes instructions for performing the following to obtain environmental information of the cleaning area:
Obtaining an object image of the cleaning area based on a camera of the drone; and performing image analysis on the object image to obtain environmental information.

In another embodiment, for the cleaning device to clean the cleaning area, the program includes instructions for performing the following:
Determining a cleaning strategy based on the environmental information; and controlling the cleaning device to clean the cleaning area according to the cleaning strategy.

In another embodiment, the above program may include instructions for performing the following:
Obtaining flight parameters of the drone; and opening the airbag when the flight parameter satisfies a preset condition.

In accordance with the above, please refer to Fig. 5. Fig. 5 is a schematic diagram of a structure of a drone-based cleaning system according to an embodiment of the present disclosure. The drone-based cleaning system described in this embodiment includes a control unit 501, a determination unit 502, and an obtaining unit 503, as follows:
The control unit 501 is configured to control flying of the drone to a designated position of the object to be cleaned when the drone receives the cleaning instruction for cleaning the object to be cleaned.

The determination unit 502 is configured to determine a cleaning area corresponding to the designated position of the outer surface of the object to be cleaned;
The obtaining unit 503 is configured to obtain environment information of the cleaning area;
The control unit 501 is further configured to control, according to the environmental information, a cleaning device of the drone to be flipped from below the drone to a position parallel to the outer surface and to control the cleaning device to clean the cleaning area.

Optionally, the drone includes an environment monitoring device, and the obtaining unit 503 is specifically configured to:
Detect the cleaning area based on the environmental monitoring device of the drone to obtain dust information; and perform analysis based on the dust information to obtain environmental information.

Optionally, the drone includes a camera, and the obtaining unit 503 is specifically configured to:
Obtain an object image of the cleaning area based on a camera of the drone; and perform image analysis on the object image to obtain environmental information.

Optionally, while controlling the cleaning device to clean the cleaning area, the control unit 501 is specifically configured to:
Determine a cleaning strategy based on the environmental information; and control the cleaning device to clean the cleaning area according to the cleaning strategy.

Optionally, the drone includes an airbag. The obtaining unit 503 is further configured to obtain flight parameters of the drone, and the control unit 501 is further configured to open the airbag when the flight parameter satisfies a preset condition.

It can be seen that, in the embodiment of the present disclosure, when the drone receives the cleaning instruction for cleaning the object to be cleaned, the drone flies to the designated position of the object to be cleaned, determines the cleaning area corresponding to the designated position of the outer surface of the object to be cleaned, obtains environmental information of the cleaning area, controls the cleaning device of the drone to be flipped from below the drone to a position parallel to the outer surface according to the environmental information, and controls the cleaning device to clean the cleaning area, so that the cleaning device can be more intelligently controlled for cleaning and the cleaning of the exterior wall of the object by the drone is safer.

The embodiments of the present disclosure further provide a computer readable storage medium, wherein the computer storage medium is used to store a computer program, and the computer program makes a computer perform any of some parts or all of the acts of the drone-based cleaning methods as described in the foregoing method embodiments.

The embodiments of the present disclosure further provide a computer program product, wherein the computer program product comprises a non-transitory computer readable storage medium storing a computer program, the computer program being operative to cause a computer to execute any of the acts described in any of the drone-based cleaning methods.

It should be noted that, for the foregoing method embodiments, as a brief description, they are all described as a series of action sequences, but those skilled in the art should understand that the present disclosure is not limited by the described action sequence. Certain acts may be performed in other sequences or concurrently in accordance with the present disclosure. In the following, those skilled in the art should also understand that the embodiments described in the specification are all preferred embodiments, and the actions and embodiments involved are not necessarily required by the present application. In the above embodiments, the descriptions of the various embodiments are all focused on, and the parts that are not detailed in a certain embodiment can be referred to in the related descriptions of other embodiments.

In the several embodiments provided herein, it should be understood that the disclosed apparatus may be implemented in other ways. For example, the embodiments of the apparatus described above are merely illustrative. For example, the division of the unit is only a logical function division. In actual implementation, there may be another division manner. For example, multiple units or components may be combined or may be integrated into another system, or some features can be ignored or not executed. In addition, the mutual coupling or direct coupling or communication connection shown or discussed may be an indirect coupling or communication connection through some interface, apparatus, or unit, and may be electrical or other form.

The modules described as separate components may or may not be physically separated. The components displayed as modules may or may not be physical modules, that is, may be located in one place, or may be distributed to multiple network modules. Some or all of the modules may be selected according to actual needs to achieve the purpose of the solution of the embodiment. In addition, in the disclosure, each functional unit in each embodiment may be integrated into one processing unit, or each unit may exist physically separately, or two or more units may be integrated into one unit. The above integrated unit can be implemented in the form of hardware or in the form of a software program module.

The integrated unit, if implemented in the form of a software program module and sold or used as a standalone product, may be stored in a computer readable memory. Based on such understanding, the technical solution of the present disclosure, in essence or the contribution part to the prior art, or all or part of the technical solution may be embodied in the form of a software product, wherein the software product is stored in a memory. A number of instructions are included to cause a computer device (which may be a personal computer, server or network device, etc.) to perform all or part of the acts of the methods described in various embodiments of the present disclosure. The foregoing memory includes: a U disk, a read-only memory (ROM), a random access memory (RAM), a mobile hard disk, a magnetic disk, or an optical disk, and the like, which can store program codes.

One of ordinary skill in the art can understand that all or part of the various methods of the above embodiments can be completed by a program to instruct related hardware. The program can be stored in a computer readable memory, and the memory can include: a flash drive, read-only memory, random access, disk, or CD.

The embodiments of the present disclosure have been described in detail above. The principles and implementations of the present disclosure are described in the specific examples. The description of the above embodiments is only used to help understand the method and core ideas of the present disclosure. For those of ordinary skilled in the art, depending on the idea of the present application, there will be changes in specific embodiments and applications. In summary, the content of the present disclosure should not be construed as limiting the present disclosure.

## Claims

1. A drone-based cleaning method applied to a drone-based cleaning system, the drone-based cleaning system comprising a drone, a water supply pipe, and a detergent supply pipe, wherein the drone comprises a cleaning device and a connection end piece, the cleaning device is disposed on a belly of the drone, the drone is connected to the water supply pipe through the connection end piece, and the drone is connected to the detergent supply pipe through the connection end piece, wherein the method comprises:
flying to a designated position of an object to be cleaned when the drone receives a cleaning instruction for cleaning the object to be cleaned;
determining a cleaning area corresponding to a designated position of an outer surface of the object to be cleaned;
obtaining environmental information of the cleaning area;
controlling the cleaning device of the drone to be flipped from below the drone to a position parallel to the outer surface according to the environmental information; and
controlling the cleaning device to clean the cleaning area.

2. The method according to claim 1, wherein the drone comprises an environmental monitoring device, and the obtaining environmental information of the cleaning area comprises:
detecting the cleaning area based on the environmental monitoring device of the drone to obtain dust information; and
performing an analysis based on the dust information to obtain the environmental information.

3. The method according to claim 1, wherein the drone comprises a camera, and the obtaining environmental information of the cleaning area comprises:
obtaining an object image of the cleaning area based on the camera of the drone; and
performing image analysis on the object image to obtain the environmental information.

4. The method according to any one of claims 1 to 3, wherein the controlling the cleaning device to clean the cleaning area comprises:
determining a cleaning strategy based on the environmental information; and
controlling the cleaning device to clean the cleaning area according to the cleaning strategy.

5. The method according to any one of claims 1 to 4, wherein:
the drone comprises an airbag, and
the method comprises:
obtaining flight parameters of the drone; and
opening the airbag when the flight parameter satisfies a preset condition.

6. The method according to any one of claims 1 to 5, wherein the drone-based cleaning system comprises a security lock connected to the connection end piece.

7. A drone-based cleaning system, wherein the drone-based cleaning system comprises:
a control unit configured to fly to a designated position of an object to be cleaned when a drone of the drone-based cleaning system receives a cleaning instruction for cleaning the object to be cleaned;
a determination unit configured to determine a cleaning area corresponding to a designated position of an outer surface of the object to be cleaned; and
an obtaining unit configured to obtain environmental information of the cleaning area, wherein:
the control unit is configured to control a cleaning device of the drone to be flipped from below the drone to a position parallel to the outer surface according to the environmental information and to control the cleaning device to clean the cleaning area.

8. The system according to claim 7, wherein:
the drone comprises an environmental monitoring device, and
the obtaining unit is configured to detect the cleaning area based on the environmental monitoring device of the drone to obtain dust information and to perform an analysis based on the dust information to obtain the environmental information.

9. The system according to claim 7, wherein:
the drone comprises a camera, and
the obtaining unit is configured to obtain an object image of the cleaning area based on the camera of the drone and to perform image analysis on the object image to obtain the environmental information.

10. The system according to any one of claims 7 to 9, wherein, in controlling the cleaning device to clean the cleaning area, the control unit is configured to determine a cleaning strategy based on the environmental information and control the cleaning device to clean the cleaning area according to the cleaning strategy.

11. The system according to any one of claims 7 to 10, wherein:
the drone comprises an airbag,
the obtaining unit is configured to obtain flight parameters of the drone, and
the control unit is configured to open the airbag when the flight parameter satisfies a preset condition.

12. The system according to any one of claims 7 to 11, wherein the drone-based cleaning system comprises a security lock connected to a connection end piece of the drone to which a water supply pipe for supplying clean water to the drone is connected.

13. The method according to claim 4, wherein the environmental information describes a material composition of the object.

14. The method according to claim 4, wherein the environmental information describes an amount of dust on the object.

15. The system according to claim 10, wherein the environmental information describes at least one of a material composition of the object or an amount of dust on the object.
